# EUROPEAN PATENT SPECIFICATION

(11) **EP 1 883 025 B1**
(45) Date of publication and mention of the grant of the patent: **16.05.2012**
(21) Application number: 07112989.4
(22) Date of filing: 24.07.2007
(51) Int. Cl.: G06F 17/30

(54) **Fault tolerant user interface for wireless device**
Fehlertolerante Benutzerschnittstelle für eine drahtlose Vorrichtung
Interface utilisateur tolérant les pannes pour dispositif sans fil

(30) Priority: 24.07.2006 US 820199 P; 21.11.2006 US 562259; 20.07.2007 KR 20070072784
(43) Date of publication of application: 30.01.2008
(73) Proprietor: Samsung Electronics Co., Ltd., Suwon-si, Gyeonggi-do (KR)
(72) Inventor: Webb, Ronald J., Suwon-si Gyeonggi-do (KR)
(74) Representative: Grünecker, Kinkeldey, Stockmair & Schwanhäusser

(56) References cited:
- EP-A- 0 597 316
- WO-A-98/31172
- GB-A- 2 399 983
- US-A1- 2003 181 200
- US-B1- 6 400 903
- VAHDAT A ET AL: "WebOS: operating system services for wide area applications" HIGH PERFORMANCE DISTRIBUTED COMPUTING, 1998. PROCEEDINGS. THE SEVENTH INTERNATIONAL SYMPOSIUM ON CHICAGO, IL, USA 28-31 JULY 1998, LOS ALAMITOS, CA, USA,IEEE COMPUT. SOC, US, 28 July 1998 (1998-07-28), pages 52-63, XP010298335 ISBN: 0-8186-8579-4

## Description

The present invention relates to a wireless communication, and more particularly to a handset with fault tolerance, and a system and method for providing fault tolerance in a wireless communication.

A traditional personal computer might store applications and data in a memory location, such as a hard drive, within the computer itself. When a user wishes to launch an application, the user might retrieve the application from the local storage location and cause the application to execute on the processor of the personal computer. Under a concept known as WebOS, a personal computer might be able to make use of applications that are stored remotely on a server computer. Such a personal computer might have a network connection to the server and a browser or similar graphical user interface that allows a user to interact with the server. When the user launches an application through the browser, the application might execute on the server rather than on the user's computer.

Data entered by the user into the browser might be sent over the network connection to the server for processing by the remote application. When the application completes the processing of the data, the server might send the browser a digital image depicting the appearance the browser should take on as a result of the processing of the data. That is, the browser is given the appearance it would have if the processing of the data had occurred on the user's computer rather than on the server. In this way, the user can be given the impression that the application is executing on the user's own computer.

The digital image might have a bitmap format, a scalable vector graphics (SVG) format, a Graphics Interchange Format (GIF) format, a Joint Photographic Experts Group (JPEG) format, or some other format well known to one of skill in the art. The term "digital image" will be used herein to refer to an image that follows any such format.

The use of WebOS allows a personal computer with limited processing power and/or memory to behave in the manner of a more powerful computer. The low-end computer can appear to execute applications that it would otherwise be incapable of executing. The personal computer would not be tied to a particular operating system or set of locally installed proprietary applications but could instead use an open-source operating system and freely available browsers and web-based applications. It should be understood that the term WebOS refers to one platform for accessing applications and data remotely over a network but that other platforms which are well known to those skilled in the art are available for performing similar functions. The term WebOS will be used herein to refer to any such platform.

US 6,400,903 B1 discloses a remote camera with a camera relay method and an apparatus for remotely operating such a digital camera over a communication link. The photographs of the remote camera are transmitted to a server or the like, and the link to the camera is also used for remote controlling same.

WO 98/31172 A discloses some kind of handset connected to a servers node as some kind of remote server. The handset is a kind of intelligent terminal which may request some data from the service node. The service node can send some kind of state table to this intelligent terminal, which then allows same to perform a new application.

It is an object of the present invention to provide a handset a corresponding system with a handset or a method for such handset providing fault tolerance in wireless communication even in case a network connectivity is temporarily lost such that the handset may have functionality that would otherwise only be available in more expensive headsets, as defined in claims 1, 6 and 13.

This object is solved by the features of the independent claims.

Preferred embodiments are defined in the dependent claims.

In accordance with embodiment of the present invention, a handset comprises a buffer and a state table framework. The buffer is operable to accumulate a plurality of digital images and to provide the accumulated digital images to promote display on the handset. The state table framework is operable, when a wireless connection to a server is available, to receive at least some state table information from the server. The state table framework is further operable, when the wireless connection to the server is not available, to respond to an input and transition to a next state in the state table to promote display appropriate digital images corresponding to the input on the handset.

In accordance with another embodiment of the present invention, a system for providing fault tolerance in a wireless communication comprises a handset and a server. The handset contains a buffer operable to accumulate a plurality of digital images of the handset and to provide the accumulated digital images to promote display on the handset. The handset further contains a state table framework operable, when a wireless connection to a server is available, to receive at least some state table information from the server, and further operable, when the wireless connection to the server is not available, to respond to an input and transition to a next state in the state table to promote display appropriate digital images corresponding to the input on the handset. The server contains a state table generation component operable to create the state table information.

In accordance with still another embodiment of the present invention, a method for providing fault tolerance in a wireless communication comprises providing a plurality of digital images to a buffer in a handset, the digital images being temporarily stored in the buffer and passed to a display of the handset. The method further comprises providing a state table containing a plurality of next states to the handset when a wireless connection from the handset to a server is available. The method further comprises, when the wireless connection from the handset to the server is not available, receiving a user input and, based on the user input, sending one of a plurality of outputs to the display.

These and other features and advantages will be more clearly understood from the following detailed description taken in conjunction with the accompanying drawings and claims.

The above and other exemplary features, aspects, and advantages of the present invention will be more apparent from the following detailed description taken in conjunction with the accompanying drawings, in which:
FIG. 1 illustrates a system for providing fault tolerance on a handset according to an embodiment of the present invention;
FIG. 2 illustrates a state table that might be used in a fault tolerance system according to an embodiment of the present invention;
FIG. 3 illustrates a procedure for providing fault tolerance in a wireless communication according to an embodiment of the present invention;
FIG. 4 is a diagram of a wireless communications system including a handset according to an embodiment of the present invention;
FIG. 5 is a block diagram of a handset according to an embodiment of the present invention; and
FIG. 6 is a diagram of a software environment that may be implemented on a handset according to an embodiment of the present invention.

It should be understood at the outset that although an illustrative implementation of an embodiment of the present invention is illustrated below, the system may be implemented using any number of techniques, whether currently known or in existence. The present invention should in no way be limited to the illustrative implementations, drawings, and techniques illustrated below, including the exemplary design and implementation illustrated and described herein, but may be modified within the scope of the appended claims along with their full scope of equivalents.

The WebOS concept might be extended for use on handheld mobile electronic devices that have the capability for a wireless connection to the Internet or other networks. That is, devices such as mobile telephones, personal digital assistants, handheld computers, and similar devices might use a locally installed browser to wirelessly interface with a network and gain access to applications and data that are stored on a remote server. Such devices will be referred to herein as handsets. The use of WebOS can give a handset with limited resources, such as limited processing and storage, access to applications that it would not be able to execute locally and can thus allow an inexpensive handset to have functionality that would otherwise be available only in more expensive handsets. Similarly, more expensive handsets can be given functionality that might otherwise require a potentially infeasible amount of processing power and/or memory.

However, the use of WebOS on handsets might be limited by the fact that network connectivity for handsets can be unreliable. Multi-path fading in a radio frequency transmission, network perturbations, and other well-known wireless networking problems can cause a temporary loss of connection between a handset and a WebOS server. If a handset user is using an application that is executing on a WebOS server and the connection to the server is lost, the user could no longer send data to or receive data from the application and the functions available through the application would be lost until the network connection is restored. This can lead to a user experience that is less satisfactory than the use of a locally installed application.

Embodiments of the present invention can give a handset user the impression that a connection is still present when network connectivity is temporarily lost. Data appears to continue to arrive from the server and data entered by the user into the handset appears to cause the appropriate actions in the browser as if the application the user had been using were still responsive. In an example, this fault tolerance capability may include one or more of the following three components: a 'flywheel' buffer, a state table framework, and a heuristic component.

The flywheel buffer temporarily stores data streaming from the server and then makes the data available to the browser. Data can be retrieved from the flywheel buffer to cover a brief connection failure. The state table framework uses the present state of the handset to anticipate the likely next states of the handset and then causes an output appropriate to the next state to appear in the browser based on an input from the user. The heuristic component learns the user's behavior and reduces the number of likely next states for a given present state based on the user's past actions in the present state.

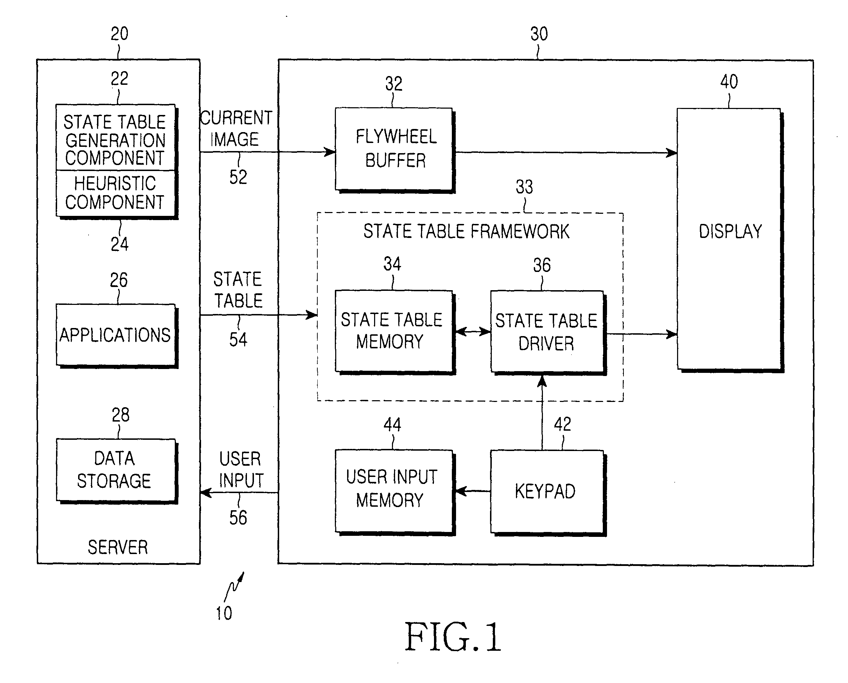

FIG. 1 illustrates a configuration of a system 10 for providing fault tolerance for a handset 30 according to an embodiment of the present invention, which can wirelessly access a remote server 20. The server 20 includes a component 22 for generating state tables that are sent to the handset 30. In an embodiment, the state table generation component 22 includes a heuristic component 24 that can refine the state table generation process. The server 20 also includes one or more applications 26 that can be used by the handset 30 and data storage unit 28 that can be retrieved by the handset 30.

The handset 30 includes a flywheel buffer 32 and a state table framework 33. The flywheel buffer 32 can receive and retain streaming data from the server 20. The state table framework 33 includes a state table memory location 34 and a state table driver 36. The state table memory 34 can receive and retain state table information from the server 20 and the state table driver 36 can read the state table information from the state table memory 34. The flywheel buffer 32 and the state table driver 36 can input data into a display 40 that can display digital images. The display 40 can also determine whether data from the flywheel buffer 32 or from the state table driver 36 is displayed.

Although the display 40 is depicted in FIG. 1 as a single element, the display 40 might actually include a display driver, a graphical user interface (such as a browser) in which the display driver causes data to appear, a display screen on which the graphical user interface appears, and other elements. The browser or one of the other elements of the display 40 might contain logic for determining whether the flywheel buffer 32 or the state table driver 36 will be the source of the image that appears on the display 40. The browser might be a special-purpose browser designed specifically for a WebOS environment. The term "display 40" as used herein should be understood to refer to any or all of the components that promote the display of data on the handset 30.

The handset 30 also includes a keypad 42 or a similar mechanism for inputting data into the handset 30. The keypad 42 can send data to the state table driver 36 and to a user input memory location 44.

Data that is entered into the display 40, perhaps through the keypad 42, may be transmitted wirelessly to the server 20 as user input 56. The user input 56 might launch one of the applications 26 on the server 20 or request data 28 from the server 20. If one of the applications 26 is launched, further user input 56 might be entered into the application 26 for processing. The application 26 might then return processed data to the handset 30 for display on the display 40. In a WebOS environment, the data that is returned to the display 40 is typically a digital image of how the display 40 should appear. That is, the display 40 can take on the appropriate appearance without any further processing by the handset 30 of the data returned from the server 20. The user is given the impression that the processing of the data occurred on the handset 30 and that the handset 30 caused the display 40 to take on the appropriate appearance when, in reality, the image that appears on the display 40, or information that promotes the display of that image, was transmitted from the server 20.

If the wireless connection between the server 20 and the handset 30 is disrupted, user input 56 may not be transmitted from the handset 30 to the server 20 and a digital image may not be transmitted from the server 20 to the handset 30. Accordingly, the user will no longer have access to the applications 26 and the data storage unit 28 on the server 20. In an example, when such an outage occurs, the flywheel buffer 32 can continue to send digital images to the display 40 for a brief period of time.

Each digital image that is sent to the handset 30 during normal operation can be referred to as a current image 52. Current images 52 are stored temporarily in the flywheel buffer 32 and after a certain amount of current image data has accumulated in the flywheel buffer 32, the current images 52 are sent to the display 40 in a first in, first out fashion. When a connection failure occurs, current images 52 no longer enter the flywheel buffer 32 but the flywheel buffer 32 can continue to send the current images 52 it had previously accumulated to the display 40. If a connection to the server 20 is reestablished before the flywheel buffer 32 sends out all of its accumulated current images 52, the flywheel buffer 32 can again begin to accumulate current images 52 and will continue to send out previously accumulated current images 52. The user will see data continuing to appear on the display 40 as if no outage had occurred. It is anticipated that the flywheel buffer 32 might cover outages lasting less than about one second.

One of skill in the art will recognize that the flywheel buffer 32 may be configured in various well-known ways, such as in a configuration similar to that of a vibration buffer in a compact disc player. It will also be recognized that the length of time over which the flywheel buffer 32 can compensate for a connection failure depends on the amount of memory in the flywheel buffer 32. A flywheel buffer 32 having a large storage capacity can bridge a long connection gap but might cause an unacceptably long delay in transferring data from the server 20 to the handset 30. A smaller flywheel buffer 32 might provide an unnoticeable delay time but might be able to bridge only small gaps.

The flywheel buffer 32 generally deals with data that flows from the server 20 to the handset 30. When a user is interacting with one of the applications 26, a two-way data flow, from the server 20 to the handset 30 and from the handset 30 to the server 20, might occur. When a network outage occurs in such situations, the state table framework 33 can give the user the impression that a connection to the server 20 is still present. The state table framework 33 is able to send one or more digital images to the display 40 so that the display 40 appears to be receiving data from the server 20. The state table framework 33 is also able to modify the display 40 in response to user actions as if the response were coming from the server 20.

According to an embodiment of the present invention, the server 20 sends information to the state table framework 33 in the form of a state table 54. As is well known in the art, a state table typically includes a set of present states, a set of possible inputs, a set of next states that can result when each of the possible inputs is applied to each of the present states, and a set of outputs associated with each of the next states. The state information is context-based, the context being the applications or handset operations currently being accessed.

As is well known in the art, a present state of a device is an aggregation of information related to the circumstances under which the device is currently operating. A present state might include one or more outputs the device is currently providing. One or more of the current outputs might be a digital image. Hereinafter, the terms "digital image" and "output" will be used interchangeably but it should be understood that, in more general terms, an output specified in a state table is not necessarily a digital image and might include sounds or other types of output.

It is also well known in the art that a next state is a mode of operation into which a device can enter from a present state. One or more digital images or other types of output might be associated with a next state.

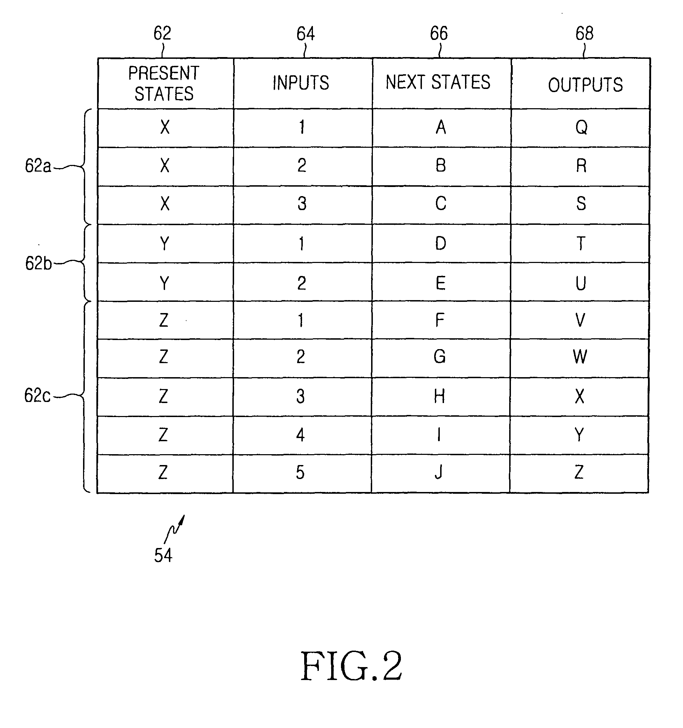

FIG. 2 illustrates an example of the state table 54 that might be used in the fault tolerance system 10. The state table 54 contains a column of present states 62, a column of inputs 64 that the user could make while in each of the present states 62, a column of next states 66 that could result when the user provides one of the inputs 64, and a column of outputs 68 associated with each of the next states 66. The inputs 64 might be equivalent to the user input 56 that is shown in FIG. 1 being transmitted from the handset 30 to the server 20. The entries shown in the state table 54 are arbitrary and are merely meant to symbolize present states 62, inputs 64, next states 66, and outputs 68 that might pertain to a device such as the handset 30.

As mentioned previously, a series of current images 52 can be stored temporarily in the flywheel buffer 32 and the current images 52 can be sent sequentially to the display 40. In an example of the present invention, each time a current image 52 is sent from the server 20 to the flywheel buffer 32, a state table 54 is sent from the server 20 to the state table memory 34. The state table 54 contains one or more next states 66 that might follow from the present state 62 associated with the current image 52 that was sent. Although the current image 52 and the state table 54 are depicted in FIG. 1 following separate data paths, the current image 52 and the state table 54 could be sent from the server 20 to the handset 30 in a single data transmission.

In an embodiment of the present invention, each output 68 associated with one of the next states 66 represents one possible appearance the display 40 could assume after the display 40 assumes the appearance specified by the present state 62. That is, when one of the outputs 68 associated with one of the present states 62 appears on the display 40, an action the user performs in response to that output 68 might result in one of the outputs 68 associated with one of the next states 66 appearing on the display 40. Since the number of functions that can be performed on the handset 30 tends to be limited, when any particular output 68 appears on the display 40, the number of next states 66 that can be entered tends to be limited.

The state table driver 36 can accept inputs 64 from the keypad 42, find the corresponding input 64 in the state table 54 that is stored in the state table memory 34, and cause the output 68 that is associated with that input 64 and the present state 62 to appear on the display 40. For example, for present state X 62a, the possible inputs 64 are 1, 2, and 3, which might represent keystrokes or other actions the user could take on the handset 30. When the connection between the handset 30 and the server 20 is lost and when the handset 30 is in present state X 62a and the user selects input 1, then next state A is entered and output Q is provided to the display 40. If the user selects input 2, next state B is entered and output R is provided to the display 40. If the user selects input 3, next state C is entered and output S is provided to the display 40.

Thus, if the handset 30 loses its connection to the server 20, the user can still enter data into the keypad 42. The display 40 will display the output 68 or digital image appropriate to the user input 64 but the digital image will have been retrieved from the state table memory 34 instead of being generated by the server 20 at the time of the input 64. To the user, it will appear that the display 40 responded appropriately to the input 64.

If the user makes an additional input 64 in response to a first next state 66 that is entered after an initial input 64, the state table driver 36 might be able to retrieve a second next state 66 based on the additional input 64 and the first next state 66. However, a state table capable of containing all possible inputs for a given present state, all possible first next states that could result from those inputs, all possible additional inputs into all of the possible first next states, and all possible second next states that could result from each of the first next states could become unmanageably large. In an embodiment of the present invention, the state table 54 stored in the state table memory 34 contains only the inputs 64 that apply to the present state 62 and the next states 66 and outputs 68 that could result from those inputs 64 and that present state 62. In other examples, depending on the size of the state table memory 34, the processing power of the state table driver 36, the judgment of the designer of the fault tolerance system 10, and other factors, additional inputs 64, next states 66, and outputs 68 could be included in the state table 54. In the explanation described above, the output 68 is described using an example of digital images, but the output 68 may be outputs of data in other formats capable of being reproduced in the handset 30, such as sound and may be transmitted related components of the handset 30 to be provided to the user. For example, if the output 68 is sound, the output 68 will be transmitted to a sound processor. For other example, if the output 68 is vibration of the handset 30, the output 68 will be transmitted to a vibrator of the handset 30.

It is conceivable that the server 20 could maintain a master state table that includes every possible state that the handset 30 could enter, every possible input available in those possible states, and every possible next state and output that could result from those inputs and those initial states. The server 20 could then send to the handset 30 only the portion of the master state table that applied to the current state of the handset 30.

In another example of the present invention, the state table generation component 22 on the server 20 generates appropriate state tables 54 'on the fly'. That is, whenever a new current image 52 is sent to the handset 30, the state table generation component 22 determines the inputs 64 that could be entered into the handset 30 when that current image 52 is displayed. The state table generation component 22 also determines the next states 66 and outputs 68 that could result from those inputs 64. Those inputs 64, next states 66, and outputs 68 are then placed in the state table 54 and transmitted to the state table memory 34.

The state table 54 might include a cluster of related present states 62 and next states 66. That is, a group of present states 62 might be similar to one another and might have one or more next states 66 in common. Some of the next states 66 might belong to the group of present states 62 such that one or more present states 62 and one or more next states 66 might appear on the display 40 in cyclical manner. Thus, the images that appear on the display 40 might all be selected from this closed group of present states 62 and next states 66 that make up a cluster. It is possible that a next state 66 that is unlikely to be reached from a given present state 62 will be included in the state table 54 or that a next state 66 that is likely to be reached from a given present state 62 will be omitted from the state table 54. However, it is anticipated that the state table generation component 22 will have sufficient intelligence to appropriately populate the state table 54 or a cluster within the state table 54 and that such imperfections in the state table 54 can be kept to a minimum.

In an embodiment, the state table generation component 22 includes a heuristic component 24 that can further reduce the size of the state table 54 that is sent to the state table memory 34. The heuristic component 24 can observe the behavior of the handset user and learn which inputs 64 the user typically enters in each present state 62. If there are inputs 64 that the user rarely makes in a particular present state 62, the heuristic component 24 can inform the state table generation component 22 to eliminate those inputs 64 and their associated next states 66 and outputs 68 from the state table 54 for that present state 62. This reduced-size state table 54 can be more efficient for the server 20 to transmit and more efficient for the state table driver 36 to read from the state table memory 34. Alternatively, when rarely used inputs 64, next states 66, and outputs 68 are eliminated, the state table 54, rather than being reduced in size, can include additional inputs 64, next states 66, and outputs 68 that might be relevant to the present state 62 but that might not have been included in state table 54 otherwise. This may allow even longer service disruptions to go unnoticed by the user.

In an example of the present invention, a browser or other component in the display 40 determines whether the data that appears on the display 40 will come from the flywheel buffer 32 or from the state table driver 36. When the handset 30 is connected wirelessly to the server 20, the browser allows digital images from the server 20 to pass through the flywheel buffer 32 to the display 40. When a network outage occurs, and when no user data entry occurs, the browser will continue to allow the digital images that have accumulated in the flywheel buffer 32 to pass to the display 40.

If a user data entry does occur, the browser might cause data from the state table driver 36 to be sent to the display 40. That is, if the user makes an input 64 into the keypad 42, the state table driver 36 might look up the input 64 in the state table 54 stored in the state table memory 34. The state table driver 36 might then send the output 68 associated with that input 64 to the browser and the browser might pass that output 68 to the display 40. Other methods of determining when transitions between flywheel buffer data and state table driver data should be made will be apparent to one of skill in the art.

When a wireless connection to the server 20 is lost, a standard connection module in the handset 30 tries to reconnect to the server 20, as is well known in the art. The fault tolerance actions described above take place while this reconnection is sought. Any inputs 64 the user makes into the keypad 42 during the outage merely cause a particular digital image stored in the state table memory 34 to be sent to the display 40. These inputs 64 do not have any actual impact on any applications 26 that might have been executing before the outage.

In an embodiment of the present invention, any inputs 64 the user makes into the keypad 42 during a network outage are stored in the user input memory 44. When a connection to the server 20 is regained, a synchronization procedure can occur in which the contents of the user input memory 44 are sent to the server 20 for the appropriate processing. This data from the user input memory 44 can then be entered into the applications 26 to which it applies and the applications 26 can perform the appropriate processing on the data. The applications 26 can then resume their normal operations and return current images 52 and the state table 54 to the handset 30 as if the network outage had not occurred. The handset 30 thus begins to again receive 'live' data from the server 20.

The transmission of current images 52 and the state table 54 from the server 20 to the handset 30 can occur via well-known wireless data transmission protocols. In an embodiment, the asynchronous JavaScript and XML (Ajax) programming tools might be used to encode the data that is sent from the server 20 to the handset 30. As is well known in the art, Ajax allows only a portion of a web page to be updated while the remainder of the web page is unchanged. The use of Ajax in the fault tolerance system 10 allows only the data needed to update the display 40, rather than the entire image to be displayed, to be sent to the handset 30. This can promote efficient transmission of current images 52 and state tables 54 from the server 20 to the handset 30.

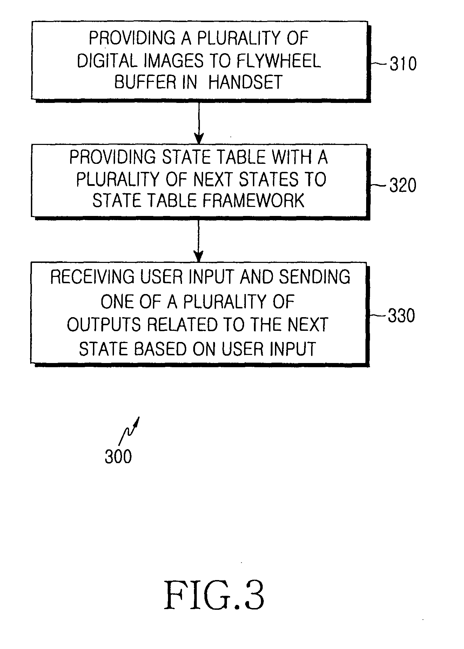

FIG. 3 illustrates a method 300 for providing fault tolerance in a wireless communication. In box 310, a plurality of digital images is provided to a flywheel buffer 32 in a handset 30. The digital images are temporarily stored in the flywheel buffer 32 and are then passed to a display 40 on the handset 30. In box 320, a state table with a plurality of next states 66 is provided to a state table framework 33 in the handset 30 when a wireless connection from the handset 30 to a server 20 is available. In box 330, when a wireless connection from the handset 30 to the server 20 is not available, a next state 66 in the state table 54 is sent to the display 40 based on a user input.

While this method cannot guarantee substantially operation during a network failure, fault tolerance can be provided for short durations. Longer network outages might cause the handset to revert to a minimal operation mode in which the applications on the remote server cannot be accessed.

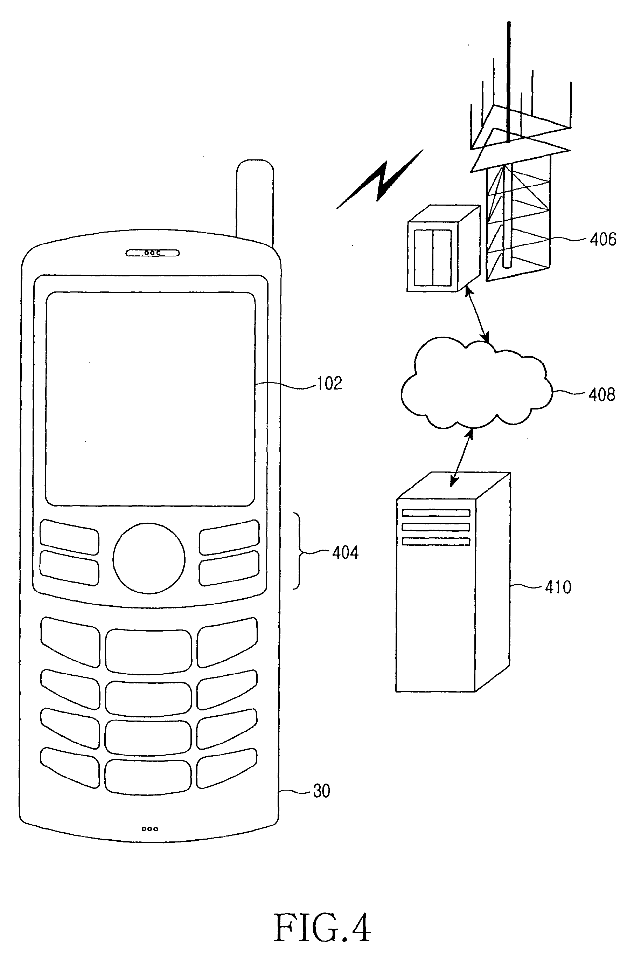

FIG. 4 shows a wireless communications system including the handset 30. The handset 30 is operable for implementing embodiments of the present invention, but the present invention should not be limited to these implementations. Though illustrated as a mobile phone, the handset 30 may take various forms including a wireless handset, a pager, a personal digital assistant (PDA), a portable computer, a tablet computer, or a laptop computer. Many suitable handsets combine some or all of these functions. In some examples of the present invention, the handset 30 is not a general purpose computing device like a portable, laptop or tablet computer, but rather is a special-purpose communications device such as a mobile phone, wireless handset, pager, or PDA.

The handset 30 includes a display 102, which may be equivalent in whole or in part to the display 40 of FIG. 1. The handset 30 also includes a touch-sensitive surface or keys 404 for input by a user, which may be equivalent to the keypad 42 of FIG. 1. The handset 30 may present options for the user to select, controls for the user to actuate, and/or cursors or other indicators for the user to direct. The handset 30 may further accept data entry from the user, including numbers to dial or various parameter values for configuring the operation of the handset 30. The handset 30 may further execute one or more software or firmware applications in response to user commands. These applications may configure the handset 30 to perform various customized functions in response to user interaction.

Among the various applications executable by the handset 30 are a web browser, which enables the display 40 (or the display 102) to show a web page. The web page is obtained via wireless communications with a cell tower 406, a wireless network access node, or any other wireless communication network or system. The cell tower 406 (or wireless network access node) is coupled to a wired network 408, such as the Internet. Via the wireless link and the wired network, the handset 30 has access to information on various servers, such as a server 410. The server 410 may be equivalent to the server 20 and may provide content that may be shown on the display 102.

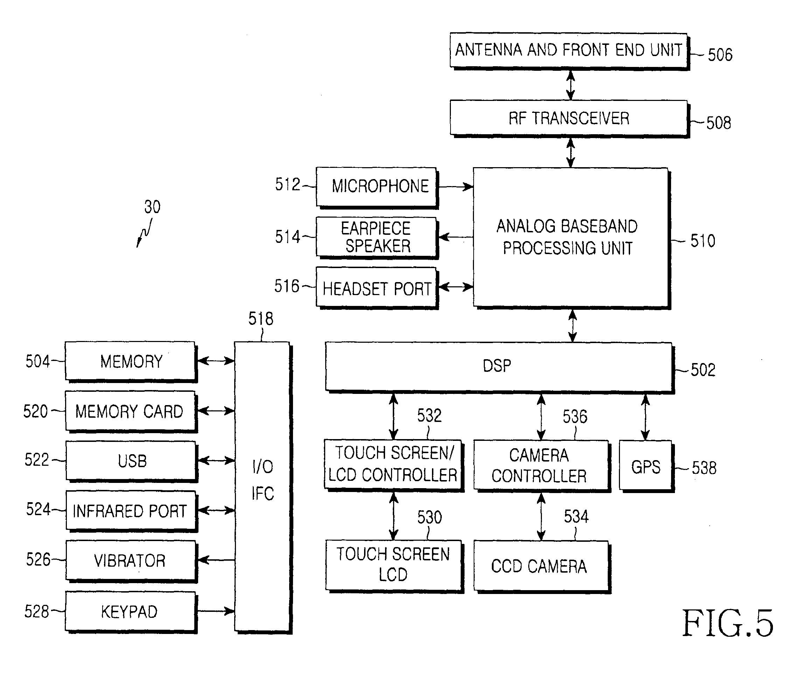

FIG. 5 shows a block diagram of the handset 30. The handset 30 includes a digital signal processor (DSP) 502 and a memory 504. As shown, the handset 30 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538.

The DSP 502 or some other form of controller or central processing unit operates to control the various components of the handset 30 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna / front end unit 506 may be provided to convert between wireless signals and electrical signals, enabling the handset 30 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the handset 30 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In examples of the present invention, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the infrared port 524. The USB interface 522 may enable the handset 30 to function as a peripheral device to exchange information with a personal computer or other computer system. The infrared port 524 and other optional ports such as a Bluetooth interface or an IEEE 802.11 compliant wireless interface may enable the handset 30 to communicate wirelessly with other nearby handsets and/or wireless base stations.

The input/output interface 518 may further connect the DSP 502 to the vibrator 526 that, when triggered, causes the handset 30 to vibrate. The vibrator 526 may serve as a mechanism for silently alerting the user to any of various events such as an incoming call, a new text message, and an appointment reminder.

The keypad 528 couples to the DSP 502 via the interface 518 to provide one mechanism for the user to make selections, enter information, and otherwise provide input to the handset 30. Another input mechanism may be the touch screen LCD 530, which may also display text and/or graphics to the user. The touch screen LCD controller 532 couples the DSP 502 to the touch screen LCD 530.

The CCD camera 534 enables the handset 30 to take digital pictures. The DSP 502 communicates with the CCD camera 534 via the camera controller 536. The GPS sensor 538 is coupled to the DSP 502 to decode global positioning system signals, thereby enabling the handset 30 to determine its position. Various other peripherals may also be included to provide additional functions, e.g., radio and television reception.

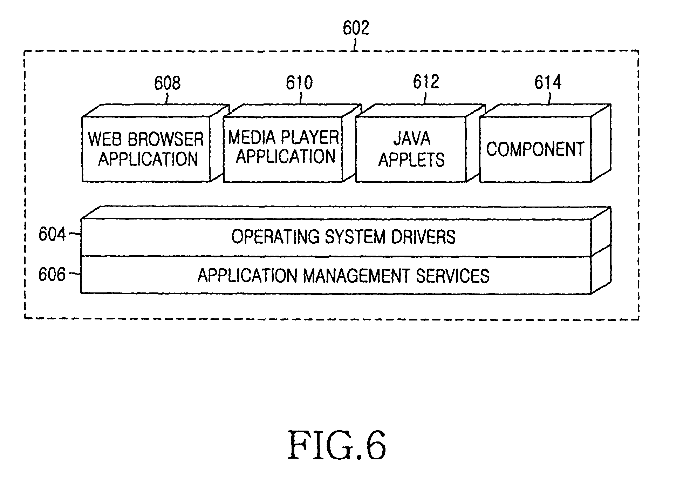

FIG. 6 illustrates a software environment 602 that may be implemented by the DSP 502. The DSP 502 executes operating system drivers 604 that provide a platform from which the rest of the software operates. The operating system drivers 604 provide drivers for the handset hardware with standardized interfaces that are accessible to application software. The operating system drivers 604 include application management services ("AMS") 606 that transfer control between applications running on the handset 30. Also shown in FIG. 6 are a web browser application 608, a media player application 610, and Java applets 612. The web browser application 608 configures the handset 30 to operate as a web browser, allowing a user to enter information into forms and select links to retrieve and view web pages. The media player application 610 configures the handset 30 to retrieve and play audio or audiovisual media. The Java applets 612 configure the handset 30 to provide games, utilities, and other functionality. A component 614 might provide all or part of the fault tolerance functionality as described herein.

While several embodiments have been provided in the present invention, it should be understood that the disclosed systems and methods may be embodied in many other specific forms without departing from the scope of the present invention. The examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present invention. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

According to the present invention, there are provided a handset with fault tolerance, and a system and method for providing fault tolerance in wireless communication. The handset, and the system and method can give a handset user the impression that a connection is still present when network connectivity is temporarily lost. Though the network connectivity is lost, data can appears to continue to arrive from the server and data entered by the user into the handset can appears to cause the appropriate actions in the browser as if the application the user had been using were still responsive.

## Claims

1. A handset (30), comprising
a buffer (32) operable to accumulate a plurality of digital images to be transmitted in a streaming mode when the handset (30) is connected to and executes a predetermined application stored in a remote server (20) and to provide the accumulated digital images to promote display on the handset; and
a state table framework (33) operable, when a wireless connection to the server (20) is available, to receive at least one or more state table information from the server, the state table information storing state information according to the execution of the predetermined application, and the state table framework further operable, when the wireless connection to the server is not available, to cause transition from a present state to a next state found in the state table information based on user input when the user input related to the predetermined application exists, to send output corresponding to the next state a component to represent the output, so that output corresponding to the user input is provided to the user when the wireless connection to the server is not available.

2. The handset of claim 1, wherein the state table framework (33) comprises:
a state table memory location (34) operable to store the state table information; and
a state table driver (36) operable to receive the user input, find the next state in the state table information that corresponds to the user input, and send one of a plurality of outputs related to the next state for display on the handset.

3. The handset of claim 2, further comprising a browser that, when the wireless connection to the server is not available, passes one of a plurality of the digital images from the buffer (32) to the display (40) when user input related to the predetermined application is not generated and passes one of the plurality of outputs provided from the state table framework to the display when user input related to the predetermined application exists.

4. The handset of one of claims 1 to 3, further comprising a user input memory location (44) operable to store at least one user input when the wireless connection to the server (20) is not available and operable to send the at least one stored user input to the server when the wireless connection is restored.

5. The handset of one of claims 1 to 4, wherein the digital images and the state table information are transmitted according to at least one Ajax programming tool.

6. A system for providing fault tolerance in a wireless communication, comprising:
a handset (30) including a buffer (32) operable to accumulate a plurality of digital images to be transmitted in a streaming mode when the handset (30) is connected to and executes a predetermined application stored in a remote server (20) and to provide the accumulated digital images to promote display on the handset, and further including a state table framework (33) operable, when a wireless connection to the server (20) is available, to receive at least one or more state table information from the server, the state table information storing state information according to the execution of the predetermined application, and the state table framework further operable, when the wireless connection to the server is not available, to cause transition from a present state to a next state found in the state table information based on user input when the user input related to the predetermined application exists, to send output corresponding to the next state a component to represent the output; and
the server (20) including a state table generation component (22) operable to create the state table information.

7. The system of claim 6, wherein the handset (30) is operable to access a predetermined application that is executable on the server (20).

8. The system of claim 6 or 7, wherein the state table framework (33) comprises:
a state table memory location (34) operable to store the state table information; and
a state table driver (36) operable to receive the user input, find the next state in the state table information that corresponds to the user input, and send one of a plurality of outputs related to the next state for display on the handset.

9. The system of any of claims 6 to 8, wherein the handset (20) further comprises a browser that, when the wireless connection to the server is not available, passes one of a plurality of the digital images from the buffer (32) to the display when user input related to the predetermined application is not generated and passes one of the plurality of outputs provided from the state table framework to the display when user input related to the predetermined application exists.

10. The system of any of claims 6 to 9, wherein the handset (20) further comprises a user input memory location (44) operable to store at least one user input when the wireless connection to the server (20) is not available and operable to send the at least one stored user input to the server when the wireless connection is restored.

11. The system of any of claims 6 to 10, wherein the server (20) comprises a plurality of applications executable on the server and accessible by the handset (30), the plurality of applications not stored on the handset.

12. The system of any of claims 6 to 11, wherein the state table generation component (22) further comprises a heuristic component (24) operable to determine which next states to include in the state table information based on at least one past input of the user.

13. A method for providing fault tolerance in a wireless communication, comprising the steps of:
(1) connecting with and executing, by a handset (30), a predetermined application in a remote server (20);
(2) transmitting, by the server (20), a plurality of digital images in a streaming mode and one or more state table information storing state information to the handset (30) while the connection to the handset is maintaining, the plurality of digital images being generated depending on the execution of the predetermined application depending on the execution of the predetermined application, the state information being state information depending on the execution of the predetermined application;
(3) receiving, by the handset (30), the plurality of digital images and storing the plurality of digital images into a buffer, and receiving the state table information and storing the state table information into a state table framework (33); and
(4) when the wireless connection to the server (20) is not available, causing, by the state table framework (33), transition from a present state to a next state found in the state table information based on user input when the user input related to the predetermined application exists, and sending output corresponding to the next state a component to represent the output so as to provide output corresponding to the user input to the user.

14. The method of claim 13, wherein step (1) comprises the steps, by the handset (30), of:
connecting with the server (20) and selecting the predetermined application;
executing the predetermined application on the server; and
updating the display (40) of the handset (30) based on the execution of the predetermined application from the server (20).

15. The method of claim 14, wherein the predetermined application is defined as a WebOS application executing on the server (20).

16. The method of one of claims 13 to 16, wherein step (4) further comprises the steps, by the handset (30), of
storing the user input generated when the wireless connection to the server is not available; and
sending the stored user input to the server (20) when the wireless connection is restored.

17. The method of one of claims 13 to 16, wherein the server (20), in step (2), determines the state information to be included in the state table information in consideration of previous user handset (30) activity when generating the state table information.

18. The method of claim 17, wherein the server (20) generates a cluster of related present and next states based on a current user activity, causes the generated cluster to be included in the state table information, and send the state table information when generating the state table information.

19. The method of claim 18, wherein the server (20) generates the cluster based on in consideration of previous user handset activity when generating the cluster.

20. The method of one of claims 13 to 19, further comprising the step of (5) when the wireless connection to the server (20) is not available, sequentially displaying the plurality of digital images stored in the buffer when user input related to the predetermined application do not exist.

## Patentansprüche

1. Handgerät (30), das umfasst:
einen Pufferspeicher (32), der in Funktion eine Vielzahl digitaler Bilder speichern kann, die in einem Streaming-Modus gesendet werden sollen, wenn das Handgerät (30) mit einer vorgegebenen, in einem Remote-Server (20) gespeicherten Anwendung verbunden ist und diese ausführt, und die gespeicherten digitalen Bilder bereitstellen kann, um Anzeige auf dem Handgerät zu ermöglichen; und
ein Zustandstabellen-System (33), das in Funktion, wenn eine Drahtlosverbindung zu dem Server (20) verfügbar ist, wenigstens eine oder mehr Zustandstabellen-Information/en von dem Server empfangen kann, wobei die Zustandstabellen-Information Zustandsinformationen entsprechend der Ausführung der vorgegebenen Anwendung speichert, und das Zustandstabellen-System des Weiteren in Funktion, wenn die Drahtlosverbindung zu dem Server nicht verfügbar ist, Übergang von einem existierenden Zustand zu einem nächsten, in den Zustandstabellen-Informationen gefundenen Zustand auf Basis von Benutzereingabe veranlassen kann, wenn die Benutzereingabe bezüglich der vorgegebenen Anwendung vorhanden ist, und Ausgabe, die dem nächsten Zustand entspricht, zu einer Komponente zum Wiedergeben der Ausgabe leiten kann, so dass Ausgabe, die der Benutzereingabe entspricht, dem Benutzer bereitgestellt wird, wenn die Drahtlosverbindung zu dem Server nicht verfügbar ist.

2. Handgerät nach Anspruch 1, wobei das Zustandstabellen-System (33) umfasst:
einen Zustandstabellen-Speicherort (34), an dem in Funktion die Zustandstabellen-Informationen gespeichert werden können; und
eine Zustandstabellen-Steuereinrichtung (36), die in Funktion die Benutzereingabe empfangen kann, den nächsten Zustand in den Zustandstabellen-Informationen ermitteln kann, der der Benutzereingabe entspricht, und eine einer Vielzahl von Ausgaben bezüglich des nächsten Zustandes zur Anzeige auf dem Handgerät leiten kann.

3. Handgerät nach Anspruch 2, das des Weiteren einen Browser umfasst, der, wenn die Drahtlosverbindung zu dem Server nicht verfügbar ist, eines einer Vielzahl der digitalen Bilder aus dem Pufferspeicher (32) zu der Anzeigeeinrichtung (40) weiterleitet, wenn keine Eingabe bezüglich der vorgegebenen Anwendung erzeugt wird, und eine der Vielzahl von Ausgaben, die von dem Zustandstabellen-System bereitgestellt werden, zu der Anzeigeeinrichtung weiterleitet, wenn Benutzereingabe bezüglich der vorgegebenen Anwendung vorhanden ist.

4. Handgerät nach einem der Ansprüche 1 bis 3, das des Weiteren einen Benutzereingabe-Speicherort (44) umfasst, an dem in Funktion wenigstens eine Benutzereingabe gespeichert werden kann, wenn die Drahtlosverbindung zu dem Server (20) nicht verfügbar ist, und von dem die wenigstens eine gespeicherte Benutzereingabe zu dem Server geleitet werden kann, wenn die Drahtlosverbindung wiederhergestellt ist.

5. Handgerät nach einem der Ansprüche 1 bis 4, wobei die digitalen Bilder und die Zustandstabellen-Informationen entsprechend wenigstens einem Ajax-Programmierwerkzeug übertragen werden.

6. System zum Herstellen von Fehlertoleranz bei einer Drahtloskommunikation, das umfasst:
ein Handgerät (30), das einen Pufferspeicher (32) enthält, der in Funktion eine Vielzahl digitaler Bilder speichern kann, die in einem Streaming-Modus gesendet werden sollen, wenn das Handgerät (30) mit einer vorgegebenen, in einem Remote-Server (20) gespeicherten Anwendung verbunden ist und diese ausführt, und die gespeicherten digitalen Bilder bereitstellen kann, um Anzeige auf dem Handgerät zu ermöglichen, und das des Weiteren
ein Zustandstabellen-System (33) enthält, das in Funktion, wenn eine Drahtlosverbindung zu dem Server (20) verfügbar ist, wenigstens eine oder mehr Zustandstabellen-Information/en von dem Server empfangen kann, wobei die Zustandstabellen-Informationen Zustandsinformationen entsprechend der Ausführung der vorgegebenen Anwendung speichern, und das Zustandstabellen-System des Weiteren in Funktion, wenn die Drahtlosverbindung zu dem Server nicht verfügbar ist, Übergang von einem existierenden Zustand zu einem nächsten, in den Zustandstabellen-Informationen gefundenen Zustand auf Basis von Benutzereingabe veranlassen kann, wenn die Benutzereingabe bezüglich der vorgegebenen Anwendung vorhanden ist, und Ausgabe, die dem nächsten Zustand entspricht, zu einer Komponente zum Wiedergeben der Ausgabe senden kann, und
der Server (20) eine Zustandstabellen-Generierungskomponente (22) enthält, die in Funktion die Zustandstabellen-Informationen generieren kann.

7. System nach Anspruch 6, wobei das Handgerät (30) in Funktion auf eine vorgegebene Anwendung zugreifen kann, die auf dem Server (20) ausgeführt werden kann.

8. System nach Anspruch 6 oder 7, wobei das Zustandstabellen-System (33) umfasst:
einen Zustandstabellen-Speicherort (34), an dem in Funktion die Zustandstabellen-Informationen gespeichert werden können; und
eine Zustandstabellen-Steuereinrichtung (36), die in Funktion die Benutzereingabe empfangen kann, in den Zustandstabellen-Informationen den nächsten Zustand ermitteln kann, der der Benutzereingabe entspricht, und eine einer Vielzahl von Ausgaben bezüglich des nächsten Zustandes zur Anzeige auf dem Handgerät leiten kann.

9. System nach Anspruch 6 bis 8, wobei das Handgerät (20) des Weiteren einen Browser umfasst, der, wenn die Drahtlosverbindung zu dem Server nicht verfügbar ist, eines einer Vielzahl der digitalen Bilder aus dem Pufferspeicher (32) zu der Anzeigeeinrichtung weiterleitet, wenn keine Eingabe bezüglich der vorgegebenen Anwendung erzeugt wird, und eine der Vielzahl von Ausgaben, die von dem Zustandstabellen-System bereitgestellt werden, zu der Anzeigeeinrichtung weiterleitet, wenn Benutzereingabe bezüglich der vorgegebenen Anwendung vorhanden ist.

10. System nach einem der Ansprüche 6 bis 9, wobei das Handgerät (20) des Weiteren einen Benutzereingabe-Speicherort (44) umfasst, an dem in Funktion wenigstens eine Benutzereingabe gespeichert werden kann, wenn die Drahtlosverbindung zu dem Server (20) nicht verfügbar ist, und von dem die wenigstens eine gespeicherte Benutzereingabe zu dem Server geleitet werden kann, wenn die Drahtlosverbindung wiederhergestellt ist.

11. System nach einem der Ansprüche 6 bis 10, wobei der Server (20) eine Vielzahl von Anwendungen umfasst, die auf dem Server ausgeführt werden können und auf die das Handgerät (30) zugreifen kann, wobei die Vielzahl von Anwendungen nicht auf dem Handgerät gespeichert sind.

12. System nach einem der Ansprüche 6 bis 11, wobei die Zustandstabellen-Generierungskomponente (22) des Weiteren eine heuristische Komponente (24) umfasst, die in Funktion auf Basis wenigstens einer vergangenen Eingabe des Benutzers bestimmen kann, welche nächsten Zustände in die Zustandstabellen-Informationen einzuschließen sind.

13. Verfahren zum Herstellen von Fehlertoleranz bei einer Drahtloskommunikation, das die folgenden Schritte umfasst:
1) Verbinden mit einer vorgegebenen Anwendung in einem Remote-Server (20) und Ausführen derselben durch ein Handgerät (30);
2) Senden einer Vielzahl digitaler Bilder in einem Streaming-Modus sowie einer oder mehrerer Zustandstabellen-Information/en, die Zustandsinformationen speichert/speichern, durch den Server (20) zu dem Handgerät, während die Verbindung zu dem Handgerät besteht, wobei die Vielzahl digitaler Bilder in Abhängigkeit von der Ausführung der vorgegebenen Anwendung generiert werden und die Zustandsinformationen Zustandsinformationen sind, die von der Ausführung der vorgegebenen Anwendung abhängen;
3) Empfangen der Vielzahl digitaler Bilder und Speichern der Vielzahl digitaler Bilder in einem Pufferspeicher durch das Handgerät (30) und Empfangen der Zustandstabellen-Informationen sowie Speichern der Zustandstabellen-Informationen in einem Zustandstabellen-System (33); und
4) Veranlassen von Übergang von einem existierenden Zustand zu einem in den Zustandstabellen-Informationen gefundenen nächsten Zustand auf Basis von Benutzereingabe, wenn die Benutzereingabe bezüglich der vorliegenden Anwendung vorhanden ist, und Leiten einer Ausgabe, die dem nächsten Zustand entspricht, zu einer Komponente zum Wiedergeben der Ausgabe, so dass Ausgabe, die der Benutzereingabe entspricht, dem Benutzer bereitgestellt wird, durch das Zustandstabellen-System (33), wenn die Drahtlosverbindung zu dem Server (20) nicht verfügbar ist.

14. Verfahren nach Anspruch 13, wobei Schritt 1) die folgenden, durch das Handgerät (30) ausgeführten Schritte umfasst:
Verbinden mit dem Server (20) und Auswählen der vorgegebenen Anwendung;
Ausführen der vorgegebenen Anwendung auf dem Server; und
Aktualisieren der Anzeigeeinrichtung (40) des Handgerätes (30) auf Basis der Ausführung der vorgegebenen Anwendung von dem Server (20).

15. Verfahren nach Anspruch 14, wobei die vorgegebene Anwendung als eine WebOS-Anwendung definiert ist, die auf dem Server (20) ausgeführt wird.

16. Verfahren nach einem der Ansprüche 13 bis 16, wobei Schritt 4) des Weiteren die folgenden, durch das Handgerät (30) ausgeführten Schritte umfasst:
Speichern der Benutzereingabe, die generiert wird, wenn die Drahtlosverbindung zu dem Server nicht verfügbar ist; und
Leiten der gespeicherten Benutzereingabe zu dem Server (20), wenn die Drahtlosverbindung wiederhergestellt ist.

17. Verfahren nach einem der Ansprüche 13 bis 16, wobei der Server (20) in Schritt 2) die in die Zustandstabellen-Information einzuschließenden Zustandsinformationen unter Berücksichtigung von vorhergehender Aktivität des Benutzers des Handgerätes (30) beim Generieren der Zustandstabellen-Informationen bestimmt.

18. Verfahren nach Anspruch 17, wobei der Server (20) einen Cluster zusammenhängender existierender und nächster Zustände auf Basis einer aktuellen Aktivität des Benutzers generiert, veranlasst, dass der generierte Cluster in die Zustandstabellen-Informationen eingeschlossen wird, und die Zustandstabellen-Informationen beim Generieren der Zustandstabellen-Informationen sendet.

19. Verfahren nach Anspruch 18, wobei der Server (20) den Cluster auf Basis von und unter Berücksichtigung vorhergehender Aktivität des Benutzers des Handgerätes beim Generieren des Clusters generiert.

20. Verfahren nach einem der Ansprüche 13 bis 19, das des Weiteren den folgenden Schritt umfasst:
5) sequenzielles Anzeigen der in dem Pufferspeicher gespeicherten Vielzahl digitaler Bilder, wenn keine Benutzereingabe bezüglich der vorgegebenen Anwendung vorhanden ist, wenn die Drahtlosverbindung zu dem Server (20) nicht verfügbar ist.

## Revendications

1. Combiné téléphonique (30), comprenant
un tampon (32) utilisable pour accumuler une pluralité d'images numériques à transmettre en mode de diffusion en flux lorsque le combiné téléphonique (30) est connecté à un serveur distant (20) et exécute une application prédéterminée stockée dans celui-ci, et pour procurer les images numériques accumulées de manière à faciliter l'affichage sur le combiné téléphonique ; et
un cadre d'applications de table d'états (33) utilisable, lorsqu'une connexion sans fil au serveur (20) est disponible, pour recevoir au moins une ou plusieurs informations de table d'états provenant du serveur, l'information de table d'états stockant de l'information d'état en fonction de l'exécution de l'application prédéterminée, le cadre d'applications de table d'états étant en outre utilisable, lorsque la connexion sans fil au serveur n'est pas disponible, pour provoquer la transition d'un état actuel à un état suivant trouvé dans l'information de table d'états en fonction d'une entrée d'utilisateur lorsque l'entrée d'utilisateur relative à l'application prédéterminée existe, pour envoyer une sortie correspondant à l'état suivant à un composant pour représenter la sortie, de telle sorte qu'une sortie correspondant à l'entrée d'utilisateur est fournie à l'utilisateur lorsque la connexion sans fil au serveur n'est pas disponible.

2. Combiné téléphonique selon la revendication 1, dans lequel le cadre d'applications de table d'états (33) comprend :
un emplacement de mémoire de table d'états (34) utilisable pour stocker l'information de table d'états ; et
un pilote de table d'états (36) utilisable pour recevoir l'entrée d'utilisateur, trouver l'état suivant dans l'information de table d'états qui correspond à l'entrée d'utilisateur, et envoyer une sortie parmi une pluralité relative à l'état suivant à afficher sur le combiné téléphonique.

3. Combiné téléphonique selon la revendication 2, comprenant en outre un navigateur qui, lorsque la connexion sans fil au serveur n'est pas disponible, passe une image numérique parmi une pluralité depuis le tampon (32) à l'affichage (40) lorsqu'une entrée d'utilisateur relative à l'application prédéterminée n'est pas générée et passe une sortie parmi la pluralité provenant du cadre d'applications de table d'états à l'affichage lorsqu'une entrée d'utilisateur relative à l'application prédéterminée existe.

4. Combiné téléphonique selon l'une des revendications 1 à 3, comprenant en outre un emplacement de mémoire d'entrée d'utilisateur (44) utilisable pour stocker au moins une entrée d'utilisateur lorsque la connexion sans fil au serveur (20) n'est pas disponible et utilisable pour envoyer l'au moins une entrée d'utilisateur stockée au serveur lorsque la connexion sans fil est rétablie.

5. Combiné téléphonique selon l'une des revendications 1 à 4, dans lequel les images numériques et l'information de table d'états sont transmises conformément à au moins un outil de programmation Ajax.

6. Système pour procurer une tolérance aux erreurs dans une communication sans fil, comprenant :
un combiné téléphonique (30) comprenant un tampon (32) utilisable pour accumuler une pluralité d'images numériques à transmettre en mode de diffusion en flux lorsque le combiné téléphonique (30) est connecté à un serveur distant (20) et exécute une application prédéterminée stockée dans celui-ci, et pour procurer les images numériques accumulées de manière à faciliter l'affichage sur le combiné téléphonique, et comprenant en outre un cadre d'applications de table d'états (33) utilisable, lorsqu'une connexion sans fil au serveur (20) est disponible, pour recevoir au moins une ou plusieurs informations de table d'états provenant du serveur, l'information de table d'états stockant de l'information d'état en fonction de l'exécution de l'application prédéterminée, le cadre d'applications de table d'états étant en outre utilisable, lorsque la connexion sans fil au serveur n'est pas disponible, pour provoquer la transition d'un état actuel à un état suivant trouvé dans l'information de table d'états en fonction d'une entrée d'utilisateur lorsque l'entrée d'utilisateur relative à l'application prédéterminée existe, pour envoyer une sortie correspondant à l'état suivant à un composant pour représenter la sortie ; et
le serveur (20) comprenant un composant de génération de table d'états (22) utilisable pour créer l'information de table d'états.

7. Système selon la revendication 6, dans lequel le combiné téléphonique (30) est utilisable pour accéder à une application prédéterminée qui est exécutable sur le serveur (20).

8. Système selon la revendication 6 ou 7, dans lequel le cadre d'applications de table d'états (33) comprend :
un emplacement de mémoire de table d'états (34) utilisable pour stocker l'information de table d'états ; et
un pilote de table d'états (36) utilisable pour recevoir l'entrée d'utilisateur, trouver l'état suivant dans l'information de table d'états qui correspond à l'entrée d'utilisateur, et envoyer une sortie parmi une pluralité relative à l'état suivant pour l'afficher sur le combiné téléphonique.

9. Système selon l'une quelconque des revendications 6 à 8, dans lequel le combiné téléphonique (20) comprend en outre un navigateur qui, lorsque la connexion sans fil au serveur n'est pas disponible, passe une image numérique parmi une pluralité depuis le tampon (32) à l'affichage lorsqu'une entrée d'utilisateur relative à l'application prédéterminée n'est pas générée, et passe une sortie parmi la pluralité fournie à partir du cadre d'applications de table d'états à l'affichage lorsqu'une entrée d'utilisateur relative à l'application prédéterminée existe.

10. Système selon l'une quelconque des revendications 6 à 9, dans lequel le combiné téléphonique (20) comprend en outre un emplacement de mémoire d'entrée d'utilisateur (44) utilisable pour stocker au moins une entrée d'utilisateur lorsque la connexion sans fil au serveur (20) n'est pas disponible et utilisable pour envoyer l'au moins une entrée d'utilisateur stockée au serveur lorsque la connexion sans fil est rétablie.

11. Système selon l'une quelconque des revendications 6 à 10, dans lequel le serveur (20) comprend une pluralité d'applications exécutables sur le serveur et accessibles par le combiné téléphonique (30), la pluralité d'applications n'étant pas stockée sur le combiné téléphonique.

12. Système selon l'une quelconque des revendications 6 à 11, dans lequel le composant de génération de table d'états (22) comprend en outre un composant heuristique (24) utilisable pour déterminer quels états suivants doivent être inclus dans l'information de table d'états en fonction d'au moins une entrée antérieure de l'utilisateur.

13. Procédé pour procurer une tolérance aux erreurs dans une communication sans fil, comprenant les étapes consistant à :
(1) se connecter à un combiné téléphonique (30) et lui faire exécuter une application prédéterminée sur un serveur distant (20) ;
(2) transmettre, via le serveur (20), une pluralité d'images numériques en mode de diffusion en flux et une ou plusieurs informations de table d'états stockant de l'information d'état vers le combiné téléphonique (30) pendant que la connexion avec le combiné téléphonique est maintenue, la pluralité d'images numériques étant générée en fonction de l'exécution de l'application prédéterminée, l'information d'état étant de l'information d'état qui dépend de l'exécution de l'application prédéterminée ;
(3) recevoir, via le combiné téléphonique (30), la pluralité d'images numérique et stocker la pluralité d'images numériques dans un tampon, et recevoir l'information de table d'états et la stocker dans un cadre d'applications de table d'états (33) ; et
(4) lorsque la connexion sans fil au serveur (20) n'est pas disponible, provoquer, via le cadre d'applications de table d'états (33), la transition d'un état actuel à un état suivant trouvé dans l'information de table d'états en fonction d'une entrée d'utilisateur lorsque l'entrée d'utilisateur relative à l'application prédéterminée existe, et envoyer une sortie correspondant à l'état suivant à un composant pour représenter la sortie, de manière à fournir une sortie correspondant à l'entrée d'utilisateur à l'utilisateur.

14. Procédé selon la revendication 13, dans lequel l'étape (1) comprend les étapes, mises en oeuvre par le combiné téléphonique (30), consistant à :
se connecter avec le serveur (20) et sélectionner l'application prédéterminée ;
exécuter l'application prédéterminée sur le serveur ; et
mettre à jour l'affichage (40) du combiné téléphonique (30) en fonction de l'exécution de l'application prédéterminée à partir du serveur (20).

15. Procédé selon la revendication 14, dans lequel l'application prédéterminée est définie comme étant une application WebOS exécutée sur le serveur (20).

16. Procédé selon l'une des revendications 13 à 16, dans lequel l'étape (4) comprend en outre les étapes, mises en oeuvre par le combiné téléphonique (30), consistant à
stocker l'entrée d'utilisateur générée lorsque la connexion sans fil au serveur n'est pas disponible ; et
envoyer l'entrée d'utilisateur stockée au serveur (20) lorsque la connexion sans fil est rétablie.

17. Procédé selon l'une des revendications 13 à 16, dans lequel le serveur (20), à l'étape (2), détermine l'information d'état à inclure dans l'information de table d'états en prenant en compte l'activité antérieure du combiné téléphonique (30) de l'utilisateur lors de la génération de l'information de table d'états.

18. Procédé selon la revendication 17, dans lequel le serveur (20) génère un groupe d'états actuels et suivants connexes en fonction d'une activité courante de l'utilisateur, provoque l'inclusion du groupe généré dans l'information de table d'états, et envoie l'information de table d'états lors de la génération de l'information de table d'états.

19. Procédé selon la revendication 18, dans lequel le serveur (20) génère le groupe en prenant en compte l'activité antérieure du combiné téléphonique de l'utilisateur lors de la génération du groupe.

20. Procédé selon l'une des revendications 13 à 19, comprenant en outre l'étape (5) consistant, lorsque la connexion sans fil au serveur (20) n'est pas disponible, à afficher séquentiellement la pluralité d'images numériques stockées dans le tampon lorsqu'une entrée d'utilisateur relative à l'application prédéterminée n'existe pas.
